# FASCICULE DE BREVET EUROPEEN

(11) **EP 3 119 585 B1**
(45) Date de publication et mention de la délivrance du brevet: **05.06.2019**
(21) Numéro de dépôt: 15712842.2
(22) Date de dépôt: 19.03.2015
(51) Int. Cl.: B29C 65/36

(54) **DISPOSITIF ET PROCÉDÉ DE SOUDAGE DE PIÈCES EN MATÉRIAU COMPOSITE THERMOPLASTIQUE**
VORRICHTUNG UND VERFAHREN ZUM SCHWEISSEN VON TEILEN AUS THERMOPLASTISCHEM VERBUNDSTOFFMATERIAL
DEVICE AND PROCESS FOR WELDING THERMOPLASTIC COMPOSITE MATERIAL PARTS

(30) Priorité: 20.03.2014 FR 1452303
(43) Date de publication de la demande: 25.01.2017
(73) Titulaire: AIRBUS (SAS), 31700 Blagnac (FR)
(72) Inventeur: SOCCARD, Eric, F-44130 Blain (FR)
(74) Mandataire: Gicquel, Olivier Yves Gérard
(86) Numéro de dépôt international: PCT/EP2015/055850
(87) Numéro de publication internationale: WO 2015/140270

(56) Documents cités:
- WO-A1-96/40487
- DE-A1-102012 100 620
- NL-C2- 1 030 304
- US-A- 4 978 825
- US-A- 5 935 475
- US-A1- 2012 291 948

## Description

L'invention appartient au domaine des structures incorporant des pièces en matériaux composites assemblées entre elles.

Plus particulièrement l'invention concerne un procédé d'assemblage de pièces réalisées dans des matériaux composites thermoplastiques.

Dans le domaine des structures il est connu de réaliser des pièces en matériau composite thermoplastique, c'est-à-dire des pièces dans lesquelles des fibres minérales ou organiques sont maintenues dans une matrice rigide réversible devenant plastique à partir d'une certaine température au-dessus de leurs températures prévues d'utilisation.

Les propriétés thermoplastiques sont en particulier exploitées lors de la fabrication des pièces et notamment leur formage.

Les pièces en matériaux thermoplastiques, une fois réalisées, sont le plus souvent assemblées de manières conventionnelles par des éléments de fixations rapportés, par exemple des rivets, ou par collage.

Il est également connu de réaliser des assemblages de pièces réalisées en matériau composite thermoplastique par des techniques de soudage thermoplastique.

Dans le soudage thermoplastique la température des pièces à assembler est élevée au-dessus de la température de fusion de la résine, les pièces sont placées dans la position de l'assemblage et une pression est exercée durant un certain temps jusqu'au refroidissement de la résine pour obtenir une liaison mécanique de la zone assemblée.

Il est ainsi connu de placer les pièces dans des moules pour chauffer les pièces et d'exercer dans leurs zones de jonction des pressions entre les pièces pour en obtenir la jonction.

Ces méthodes exigent un maintien précis des pièces pendant le soudage et implique une consommation d'énergie élevée pour le chauffage.

Pour le chauffage du matériau à une température supérieure à la température de fusion de la résine thermoplastique, il est également connu d'apporter une énergie de chauffage par induction.

Le chauffage par induction peut être réalisé par des ondes radiofréquences qui sont absorbées par le matériau thermoplastique comme décrit dans le brevet US 4978825 A pour la réalisation de cordon de soudure entre deux pièces. Il est dans ce cas nécessaire de protéger les opérateurs du rayonnement en raison des puissances mises en jeu.

Le chauffage peut également être réalisé par l'application d'un champ magnétique.

Dans ce cas des courants de Foucault sont générés à l'interface à souder au moyen d'un champ magnétique alternatif.

Les matériaux thermoplastiques à souder peuvent être directement chauffés comme dans le dispositif de la demande de brevet DE 102012100620 A1 ce qui n'est pas possible efficacement avec tous les matériaux en raison de leurs faibles susceptibilités magnétiques.

Il est connu de déposer des matériaux magnétiques conducteurs au niveau des zones à souder, ces matériaux magnétiques étant chauffés par effet Joule par les courants de Foucault induits par le champ magnétique variable pour apporter la chaleur au matériau thermoplastique.

Ces matériaux magnétiques conducteurs peuvent prendre différentes formes telles que des rubans comme dans la demande de brevet NL 1 030 304 C2, des grillages comme dans la demande WO 96/40487 A1 ou le brevet US 5935475 A ou encore des poudres comme dans la demande US 2012/291948 A1.

Dans tous les cas, pour réaliser l'assemblage, le contact intime des pièces doit être assuré ce qui est assuré souvent par une pression locale de la tête apportant l'énergie de chauffage et se déplaçant le long de la ligne de soudure, ou par un moule.

Lorsque la pression résulte de l'application d'une tête, il est nécessaire que la pression entre les deux pièces soit réalisée pendant une durée suffisante et il résulte de cette exigence que la vitesse de déplacement de la tête et donc la vitesse de soudage est limitée, ce qui ne permet pas de retirer tous les avantages du chauffage par induction.

Le document US 2012/291948 A1 divulgue un dispositif de soudage thermoplastique, pour l'assemblage d'au moins une première pièce en matériau composite thermoplastique dont une matrice est essentiellement formée par une résine thermoplastique et d'au moins une seconde pièce en matériau composite thermoplastique d'un type similaire au matériau composite de la première pièce, comportant : une bobine magnétique d'induction; un insert isolant amagnétique déterminant des zones de liaison dans lesquelles des soudures thermoplastiques doivent être réalisées; une vessie déterminant un volume étanche et des moyens de réalisation d'un vide partiel dans ledit volume étanche.

Le document US 2012/291948 A1 divulgue également un procédé de soudage thermoplastique d'au moins une première pièce en matériau composite thermoplastique avec au moins une seconde pièce en matériau composite thermoplastique par mise en fusion de la résine des matrices des dites au moins une première pièce et au moins une seconde pièce au moyen d'une bobine magnétique d'induction, comportant les étapes successives de : mise en référence d'au moins une première pièce d'un insert isolant amagnétique d'un outillage de soudage thermoplastique; placement d'inserts métalliques sur les surfaces de l'au moins une première pièce correspondant à des zones de liaison devant être soudées; mise en référence d'au moins une seconde pièce dans la position relative que la dite au moins une seconde pièce doit avoir avec l'au moins une première pièce dans l'assemblage à réaliser; mise en place d'une vessie de sorte que ladite vessie détermine un volume étanche dans lequel se trouvent enfermées l'au moins une première pièce et l'au moins une seconde pièce; création d'un vide partiel dans le volume étanche pour créer, sous l'effet de la pression de l'air extérieur au volume étanche, une force d'appui de l'au moins une seconde pièce sur l'au moins une première pièce, au moins dans les zones de liaison; après refroidissement des pièces soudées à une température ambiante, ou au moins à une température sensiblement inférieure à une température de ramollissement de la résine du matériau des dites pièces, rupture du vide partiel, démontage de la vessie et démoulage de l'assemblage de pièces soudées entre elles de l'outillage.

La demande US 2012/291948 A1 décrit un outil de soudage qui enferme des bobines magnétiques. L'outil de soudage forme un moule qui épouse sensiblement la forme des pièces à souder, le cas échéant recouvert d'un matériau non électriquement conducteur, tel qu'un matériau élastomère. L'outil de soudage présente donc une forme spécifique pour chaque forme de pièce à réaliser et est réalisé dans un matériau transparent aux champs magnétique des bobines pour induire les courants de Foucault dans le matériau à chauffer placé à l'interface entre les pièces à souder.

Cette solution nécessite donc de mettre en oeuvre des moyens spécifiques complexes et donc coûteux.

L'utilisation de grillages conducteurs électriques placés à l'interface des pièces devant être soudées comporte en outre le défaut de créer des hétérogénéités de températures, en particulier si le champ magnétique généré par l'outillage n'est pas homogène et également aux extrémités des lignes de soudage, qui sont préjudiciables à la qualité du soudage et conduisent à des rejets de pièces assemblées.

La présente invention concerne un dispositif d'outillage et un procédé pour réaliser le soudage de pièces en matériaux thermoplastiques et de résine de même nature qui apporte une qualité de soudage améliorée et un temps diminué pour réaliser les soudures par rapport aux solutions antérieures.

Le dispositif de soudage thermoplastique, utilisé pour l'assemblage d'au moins une première pièce en matériau composite thermoplastique dont une matrice est essentiellement formée par une résine thermoplastique et d'au moins une seconde pièce en matériau composite thermoplastique d'un type similaire au matériau composite de la première pièce, comporte une tête magnétique d'induction qui apporte l'énergie pour chauffer la résine thermoplastique au-dessus de sa température de fusion dans la zone de la soudure.

Le dispositif comporte :
- une matrice de mise en référence des pièces devant être assemblées dont un insert isolant amagnétique détermine des zones de liaison dans lesquelles des soudures thermoplastiques doivent être réalisées ;
- une vessie déterminant entre ladite vessie et la matrice un volume étanche et des moyens de réalisation d'un vide partiel dans ledit volume étanche ;
- des moyens de déplacement de la tête magnétique d'induction à proximité des zones de liaison et sans contact avec la vessie.

Il est ainsi obtenu un dispositif pouvant assurer simultanément le maintien des éléments à souder en référence, le maintien des matériaux soudés dont la température est augmentée dans une atmosphère appauvrie en oxygène, limitant ainsi le risque d'oxydation des matériaux chauffés, une séparation des fonctions de mise en pression de la zone de soudure et de son chauffage, et enfin il est évité le risque de déplacer les pièce en cours de soudage par une action mécanique du fait du déplacement sans contact de la tête magnétique d'induction.

Avantageusement, l'insert isolant comporte au moins une empreinte dont une forme est adaptée au maintien en référence d'au moins une première pièce.

Il est ainsi facilité la mise en référence et le maintien de la première pièce ainsi que sont limités les risques de déformation de la première pièce lors de son élévation de température.

Avantageusement, l'insert isolant est réalisé dans un matériau polymère amagnétique usinable. Il est ainsi évité toute perturbation gênante du champ magnétique ainsi qu'une perte de l'énergie de chauffage apporté par la tête magnétique d'induction tout en autorisant des formes complexes pour la réalisation des empreintes dans la matrice.

Dans une forme de réalisation, l'insert isolant est maintenu immobile dans un support réalisé dans un matériau métallique amagnétique. Il est ainsi possible de réaliser une matrice dont l'insert isolant comportant les empreintes adaptées à des pièces particulières à assembler peut être facilement remplacé et ou modifié en étant réalisé dans un matériau à relativement bas coût, tel qu'une résine époxy.

Dans une forme de réalisation, des cales sont agencées sur l'insert isolant dans les zones de liaison pour servir de support à des zones des premières pièces devant être portées à une température de fusion de la résine de la matrice du matériau composite de la première pièce. La pièce dont la résine est portée à la température de fusion est ainsi séparée de l'insert isolant qui se trouve protégé, lui assurant une durée de vie opérationnelle améliorée.

L'invention concerne également un procédé de soudage thermoplastique d'au moins une première pièce en matériau composite thermoplastique avec au moins une seconde pièce en matériau composite thermoplastique par mise en fusion de la résine des matrices au moyen d'une tête magnétique d'induction.

Pour retirer les bénéfices attendu du dispositif de l'invention, le procédé comporte les étapes successives de :
- mise en référence d'au moins une première pièce dans une empreinte, de forme adaptée au maintien de ladite au moins une première pièce, d'un insert isolant d'une matrice d'un outillage de soudage thermoplastique, tel que l'outillage de l'invention ;
- placement d'inserts métalliques sur les surfaces de l'au moins une première pièce correspondant à des zones de liaison devant être soudées ;
- mise en référence d'au moins une seconde pièce sur la matrice dans la position relative que la dite au moins une seconde pièce doit avoir avec l'au moins une première pièce dans l'assemblage à réaliser ;
- mise en place d'une vessie de sorte que ladite vessie et la matrice détermine un volume étanche dans lequel se trouvent enfermées l'au moins une première pièce et l'au moins une seconde pièce ;
- création d'un vide partiel dans le volume étanche pour créer, sous l'effet de la pression de l'air extérieur au volume étanche, une force d'appui de l'au moins une seconde pièce sur l'au moins une première pièce, au moins dans les zones de liaison ;
- déplacement sans contact de la tête magnétique d'induction à proximité de toutes les zones de liaison de sorte à créer dans les inserts métalliques des courants induits et une production de chaleur par effet Joule de sorte à produire la fusion locale de la résine des matrices du matériau composite des premières et secondes pièces, tout en maintenant le vide partiel dans le volume étanche ;
- après refroidissement des pièces soudées à une température ambiante, ou au moins à une température sensiblement inférieure à une température de ramollissement de la résine du matériau des dites pièces, rupture du vide partiel, démontage de la vessie et démoulage de l'assemblage de pièces soudées entre elles de l'outillage.

Dans une forme de mise en oeuvre, le procédé comporte une étape de pose de cales entre l'insert isolant et les premières pièces dans les zones de liaisons.

Dans une forme de mise en oeuvre, pour améliorer la formation du vide partiel dans le volume étanche, il est prévu une étape de placement d'un tissus de drainage interposé entre les pièces en référence sur la matrice et la vessie, pour assurer une aspiration de l'air dans tout le volume étanche entre ladite matrice et ladite vessie.

Avantageusement les inserts métalliques sont imprégnés, avant d'être placés, d'une résine thermoplastique compatible ou de même nature que la résine thermoplastique de la matrice du matériau composite des pièces de l'assemblage à réaliser.

Il est ainsi amélioré la transmission de chaleur par la résine fondue et réalisé un apport de résine au niveau de l'interface des pièces soudées limitant le risque de formation de bulles ou d'espace creux dans la résine.

Dans une mise en oeuvre perfectionnée du procédé, pour améliorer l'homogénéité du soudage et la qualité du cordon de soudure à ses extrémités :
- des pièces sacrificielles sont mises en référence à des extrémités, suivant un sens de réalisation d'un cordon de soudure, de l'au moins une première pièce dans l'empreinte, formée à cet effet, réalisée dans l'insert isolant ;
- le placement d'inserts métalliques sur les surfaces de l'au moins une première pièce est étendu par des extensions à des extrémités dudit insert métallique sur des surface des dites pièces sacrificielles ;
- un film anti-adhérence est déposé entre les extensions et chacune des premières pièces et secondes pièces avec lesquelles lesdites extensions sont en contact en position dans l'outillage ;
- le déplacement de la tête magnétique d'induction pour réaliser le cordon de soudure est étendu à chacune des extrémités du cordon de soudure en deçà et au-delà d'une longueur utile dudit cordon de soudure de sorte à débuter et à terminer le chauffage des pièces à souder au niveau des pièces sacrificielles.

La description et les dessins d'un exemple de mise en oeuvre de l'invention, permettront de mieux comprendre les buts et avantages de l'invention. Il est clair que cette description est donnée à titre d'exemple, et n'a pas de caractère limitatif.

Dans les dessins :
- la figure 1a représente les différentes parties d'un outillage suivant l'invention pour le soudage thermoplastique de pièces en matériau composite thermoplastique, les différents éléments de l'outillage et les éléments à assembler étant représentés séparés ;
- la figure 1b représente les mêmes éléments que ceux représentés sur la figure 1 mais dans une position proche de leurs positions lorsque l'opération de soudage est en cours ;

- la figure 2 représente une vue synoptique du procédé mis en oeuvre pour réaliser le soudage thermoplastique avec l'outillage représenté sur la figure 1a et la figure 1b ;
- la figure 3 illustre, suivant une section d'une longueur d'un cordon de soudure, un détail de l'outillage pour la mise en oeuvre d'un perfectionnement du procédé améliorant la qualité des soudures aux extrémités d'un cordon de soudure.

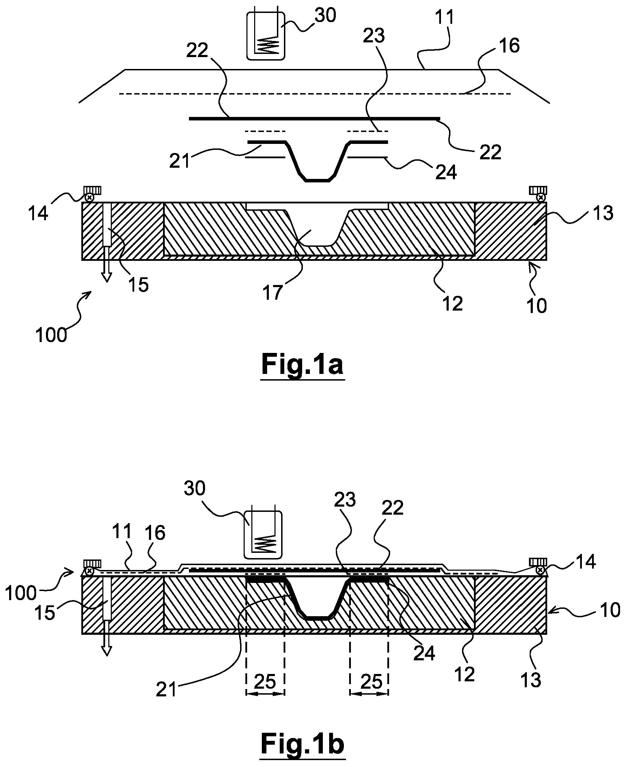

La figure 1a présente de manière schématique, suivant une coupe transversale, les différents éléments d'un outillage d'assemblage 100 par soudage thermoplastique de pièces en matériau composite thermoplastique suivant l'invention.

Sur la figure 1a les différents éléments sont écartés les uns des autres pour les besoins de l'illustration.

Sur la figure 1b on retrouve les mêmes éléments que ceux représentés sur la figure 1a mais dans la position qu'ils ont pendant le soudage et jusqu'au dégagement de l'ensemble réalisé par soudage.

Sur les figures 1a et 1b les échelles ne sont pas respectées entre les différents éléments ni les proportions de chaque élément, les dessins n'ayant qu'un but d'illustration.

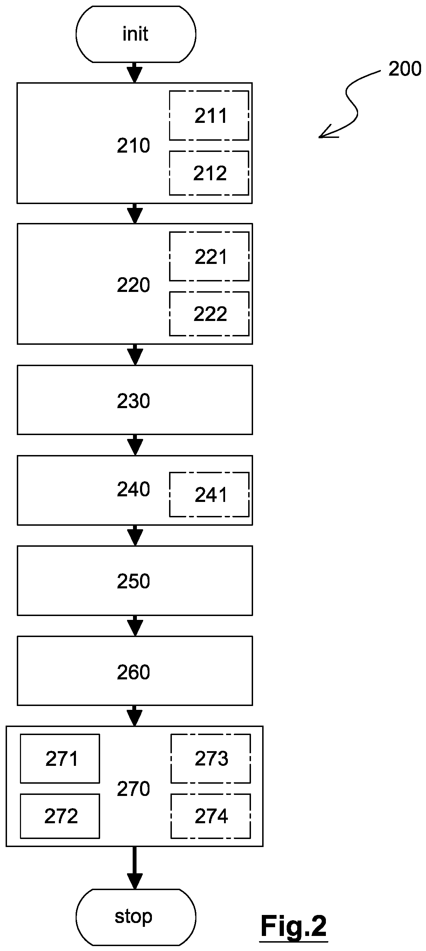

La figure 2 présente schématiquement les étapes principales d'un procédé 200 de soudage thermoplastique suivant l'invention mis en oeuvre au moyen de l'outillage de la figure 1.

Suivant l'outillage d'assemblage et le procédé de soudage thermoplastique, les pièces à assembler, préalablement réalisées en matériau composite thermoplastique, sont maintenues en référence sur une matrice 10 par une vessie 11 recouvrant les pièces, un vide partiel étant maintenu entre ladite matrice et ladite vessie.

Comme il est représenté sur la figure 1a et sur la figure 1b, l'outillage 100 comporte la matrice 10 formant un sous-ensemble rigide dudit outillage sur lequel sont positionnées des pièces à assembler par soudage thermoplastique.

Dans cet exemple une première pièce 21 est illustrée sous la forme d'un raidisseur, vu en section perpendiculaire à une longueur du raidisseur sur les figures 1a et 1b, et une seconde pièce 22 est illustrée sous la forme d'une peau.

La matrice 10 est formée dans des matériaux non magnétiques et comporte un insert isolant 12, isolant sur le plan thermique, sur lequel sont positionnées les pièces à assembler, de telle sorte que au moins des zones de liaison 25 des dites pièces devant être soudées se trouvent située au niveau dudit insert isolant.

Dans une forme de réalisation, l'insert isolant 12 est réalisé dans une résine polymère rigide, par exemple une résine époxy, non magnétique et avantageusement pouvant être usinée.

L'insert isolant 12 comporte une empreinte 17 dans laquelle est maintenue au moins une des pièces devant être soudée, dans l'exemple illustré le raidisseur correspondant à la première pièce 21.

L'insert isolant 12 est maintenu dans un support 13 pour en assurer autant que besoin la résistance mécanique lorsque l'outillage est soumis à des contraintes en utilisation. Le support 13, réalisé dans un matériau de préférence non magnétique, est par exemple réalisé dans un alliage d'aluminium.

La vessie 11 forme une barrière souple sensiblement étanche à l'air qui est solidarisée à la matrice 10 sur des bords de ladite matrice par des joints 14 d'étanchéité.

La matrice 10 et la vessie 11 déterminent un volume fermé dans lequel se trouvent les pièces à assembler par soudage thermoplastique.

Un ou des orifices d'aspiration 15 sont agencés, dans l'exemple dans le support 13 de la matrice, pour réaliser un vide d'air partiel dans le volume fermé entre la matrice et la vessie.

Le vide d'air considéré ici est un vide d'air industriel, c'est-à-dire correspondant à une pression réduite d'air de l'ordre de 100 millibar ou moins.

Du vide d'air partiel résulte une pression homogène exercée par la pression atmosphérique sur la vessie 11. Ladite vessie, souple, est déformée de sorte que la pression homogène s'exerce sur les pièces qui, mises en référence sur la matrice 10, sont maintenues dans cette position.

Comme illustré sur la figure 1b, illustrant en position sur l'outillage 100 les pièces à assembler ainsi que les différents éléments de l'outillage, la pression exercée par la vessie 11 sur les pièces permet de maintenir une pression sur des surfaces de contact entre les pièces mises en références, et en particulier dans les zones de liaison 25.

En outre un insert métallique 23, par exemple sous la forme d'un grillage, réalisé dans un matériau magnétique de sorte qu'un courant induit soit créé lorsque ledit insert métallique est soumis à un champ magnétique, est placé entre les surfaces des pièces devant être soudées, c'est-à-dire au niveau des zones de liaison 25.

Avantageusement des cales 24, par exemple des cales en matériau polymère, sont agencées sous la dite première pièce dans les zones de liaison 25 entre l'insert isolant 12, sur lequel est posée ladite première pièce, et ladite première pièce.

Une cale 24 permet de séparer la pièce de l'insert isolant 12 dans la zone soumise à un chauffage lors de l'opération de soudage.

Une profondeur de l'empreinte 17 réalisée dans l'insert isolant 12 prend en considération une épaisseur de la cale 24, une épaisseur de la première pièce 21 et une épaisseur de l'insert métallique 23 de sorte qu'une interférence positive soit assurée avec la seconde pièce 22 lorsque les pièces sont en référence sur l'outillage.

Dans un exemple de réalisation, la cale 24 est formée par un film polymère d'environ 50 micromètres d'épaisseur, l'insert métallique 23 est un grillage d'épaisseur comprise entre 0,2 et 0,3 millimètre, et il est recherché en prenant en compte l'épaisseur de la pièce, la cale et l'insert métallique une interférence positive de 50 micromètres à 100 micromètres.

L'outillage 100 comporte également une tête magnétique d'induction 30 mobile par rapport à la matrice 10.

La tête magnétique d'induction 30 génère un champ magnétique modulé de sorte que des courants soient majoritairement induits et concentrés dans l'insert métallique 23 lorsque ledit insert métallique est soumis au champ magnétique de ladite tête magnétique d'induction.

La tête magnétique d'induction 30 est mobile de sorte à pouvoir être déplacée sans contact à proximité de la matrice sur laquelle sont placés en référence les pièces à souder et la vessie 11, au moins à proximité, dans l'exemple illustré au-dessus, des zones 25 devant être soudées.

Il doit être noté l'intérêt de maximiser l'effet joule produit par le champ magnétique dans l'insert métallique 23 de sorte à amener la température rapidement à la température de fusion de la résine thermoplastique dans une zone de soudage. Pour cela il est avantageux d'augmenter la puissance induite qui amène à rechercher un maximum du produit "résistivité" x "perméabilité magnétique" du matériau de l'insert métallique 23, la fréquence du champ magnétique alternatif étant ajusté pour prendre en considération son effet sur la profondeur de champ du chauffage.

Le matériau de l'insert métallique 23 est par exemple un acier inoxydable ferritique qui répond à ces exigences d'une bonne perméabilité magnétique et d'une résistivité élevée.

Les déplacements de la tête magnétique d'induction 30 sont avantageusement réalisés par un robot, non illustré sur les figures, adapté aux mouvements devant être réalisés par ladite tête magnétique d'induction.

Pour réaliser un assemblage de pièces en matériau composite thermoplastique au moyen de l'outillage 100, il est mis en oeuvre le procédé 200 comportant les étapes successives de :
- mise en référence 210 d'au moins une première pièce 21 dans une empreinte 17, de forme adaptée au maintien de ladite au moins une première pièce, réalisée dans un insert isolant 12 d'une matrice 10 de l'outillage 100 ;
- placement 220 d'inserts métalliques 23 sur les surfaces de l'au moins une première pièce 21 correspondant à des zones de liaison 25 devant être soudées ;
- mise en référence 230 d'au moins une seconde pièce 22 sur la matrice 10 dans la position relative que la dite au moins une seconde pièce doit avoir avec l'au moins une première pièce dans l'assemblage à réaliser ;
- mise en place 240 d'une vessie 11 de sorte que ladite vessie et la matrice 10 déterminent un volume étanche dans lequel se trouvent enfermées l'au moins une première pièce et l'au moins une seconde pièce, autant que de besoin avec interposition 241 d'un tissus de drainage 16 pour assurer une aspiration de l'air dans tout le volume étanche formé sous la vessie ;
- création d'un vide partiel 250 dans le volume étanche pour créer une force d'appui de l'au moins une seconde pièce sur l'au moins une première pièce, force résultant de la différence de pression exercée sur la vessie 11 entre la pression atmosphérique et la pression dans ledit volume étanche ;
- déplacement 260 sans contact d'une tête magnétique d'induction 30 à proximité de toutes les zones de liaison 25, la puissance et la vitesse de déplacement de ladite tête magnétique d'induction étant ajustées pour apporter en tout point des dites zones de liaison l'énergie nécessaire pour élever la température de la résine du matériaux des pièces à souder de sorte à produire la fusion locale de ladite résine, tout en maintenant le vide partiel dans le volume étanche ;
- après refroidissement des pièces soudées à une température ambiante, ou au moins à une température sensiblement inférieure à une température de ramollissement de la résine du matériau des dites pièces, rupture du vide partiel 271, démontage 272 de la vessie 11 et démoulage 270 de l'outillage 100 de l'assemblage de pièces soudées entre elles.

Suivant le procédé 200, les pièces sont ainsi mises en référence avant la réalisation de la soudure et maintenue dans leurs positions relatives souhaitées par la pression, résultant du vide partiel dans le volume étanche entre la vessie 11 et la matrice 10, exercée de manière statique pour maintenir en contact entre elles les zones de liaison des pièces à assembler. Le vide partiel est créé, et donc la pression est appliquée sur les pièces, avant le début de l'opération de soudage et jusqu'après la fin du soudage, soudage thermoplastique réalisé de manière dynamique par déplacement de la tête magnétique d'induction pendant que la pression est maintenue statique.

Il résulte de ce procédé que les pièces à assembler sont parfaitement maintenues immobiles pendant le soudage et ne sont pas soumises à des efforts susceptibles de provoquer un déplacement d'une pièce par rapport à une autre.

Ce résultat est d'autant mieux atteint du fait que la tête magnétique d'induction 30 se déplace sans contact, contrairement aux procédés connus dans lesquels la tête d'induction exerce simultanément une pression à l'emplacement chauffé dans le but de réaliser un cordon de soudure.

Il est également obtenu par le procédé de l'invention une décorrélation du maintien de la pression, assurant le soudage des pièces pendant la phase dans laquelle la résine est en fusion, et du chauffage de la résine aux emplacements de soudure. Ainsi la tête magnétique d'induction 30 peut être déplacée le long des zones à souder aussi rapidement que possible sous réserve d'un apport d'énergie suffisant pour amener la résine à sa température de fusion sans qu'il soit nécessaire d'attendre que la pression locale ait été appliquée un temps suffisant pour assurer la soudure avant de déplacer ladite tête magnétique d'induction.

En outre, en réalisant le chauffage de la résine pour réaliser la soudure dans un volume où un vide partiel est réalisé préalablement, il est limité un risque d'oxydation de la résine, portée à une température de fusion, du fait d'une quantité réduite d'oxygène dans le volume étanche où se trouvent les zones de soudage.

Dans une forme de mise en oeuvre du procédé, des cales 24 sont placées 211 entre l'insert isolant 12 et la première pièce 21 au niveau des zones de liaison 25 de ladite première pièce. Les cales 24, permettent d'éviter un contact direct entre la résine, de la première pièce, soumise à fusion et l'insert isolant 12 de la matrice. Les cales sont également choisies en épaisseur pour garantir une interférence positive entre la première pièce sur laquelle est placé l'insert métallique 23 et la seconde pièce.

Les cales sont par exemple réalisées dans un film polymère mince, par exemple de moins de 100 micromètres d'épaisseur.

Dans une forme de mise en oeuvre, l'insert métallique 23, se présentant par exemple sous la forme d'un grillage métallique, ou encore d'un tissus métallique, d'une épaisseur de quelques dixièmes de millimètre, par exemple deux à trois dixièmes de millimètre, est imprégné 221 d'une résine de même nature que la résine du matériau des pièces devant être assemblées.

Une résine de même nature doit être compris comme une résine chimiquement compatible et présentant une température de fusion voisine, sinon identique, de celle de la résine du matériau des pièces à assembler.

L'imprégnation 221 de l'insert métallique avec de la résine peut être réalisée à tout moment avant que l'insert ne soit entre les deux pièces devant être assemblées.

Par exemple, l'insert métallique est imprégné de résine dans une étape amont avant la mise en place des pièces sur l'outillage.

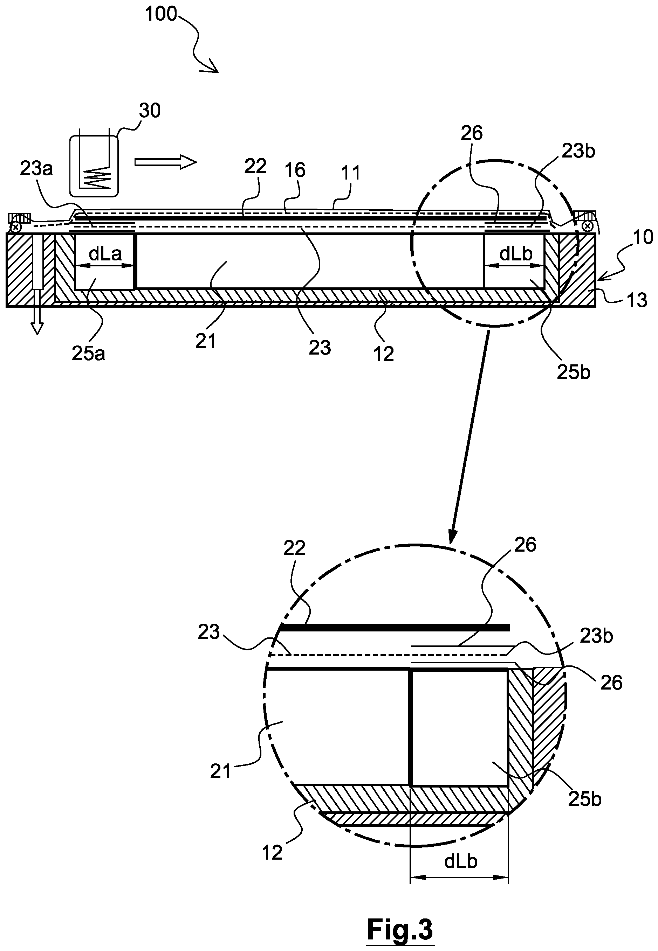

Dans une forme de mise en oeuvre du procédé, illustré sur la figure 3, l'insert métallique 23, considéré suivant une longueur de la soudure à réaliser, est d'une dimension sensiblement supérieure à la longueur de la soudure.

La longueur de la soudure est définie par le sens de déplacement de la tête magnétique d'induction 30, matérialisé sur la figure 3 par la flèche associée à ladite tête magnétique d'induction, et correspond dans l'exemple illustré à la longueur du raidisseur c'est-à-dire de la première pièce 21.

Comme illustré sur la figure 3, des extensions 23a, 23b de l'insert métallique 23 débordent à chacune des extrémités de la première pièce 21 d'une longueur d'extension dLa, respectivement dLb.

En outre des pièces sacrificielles 25a, 25b sont placées 212 sensiblement dans la continuité de la première pièce 21, une longueur de chacune des dites pièces sacrificielles correspondant sensiblement à la longueur d'extension dLa, respectivement dLb, de l'extension de l'insert métallique situé du même côté de la première pièce.

Les pièces sacrificielles sont réalisées avec des dimensions en section voisines de celle de la première pièce et avec un matériau de caractéristiques similaires, c'est-à-dire avec le même matériau composite ou un matériau de caractéristiques voisines.

On comprend ici que l'empreinte 17 est réalisée en conséquence pour les pièces sacrificielles puissent y être placées aux extrémités de la première pièce.

Un film anti-adhérence 26 est en outre déposé 222 aux interfaces entre les extensions 23a, 23b de l'insert métallique 23 et les pièces sacrificielles 25a, 25b d'une part et aux interfaces entre les extensions 23a, 23b de l'insert métallique 23 et la seconde pièce 22 d'autre part.

Le film anti-adhérence 26 est un film conducteur de la chaleur qui réalise une barrière pour la résine fondue lors du soudage et interdit ainsi le soudage entre les pièces sacrificielles et la seconde pièce.

Le film anti-adhérence 26 est par exemple un film en polyimide de quelques dizaines de microns d'épaisseur dont l'épaisseur sera pris en considération dans la réalisation des pièces sacrificielles 25a, 25b et ou de l'empreinte 17.

Lorsqu'un cordon de soudure est réalisé par déplacement de la tête magnétique d'induction 30, le déplacement de ladite tête magnétique d'induction, active, est commencé sensiblement à une première extrémité de l'insert métallique 23, par exemple au-dessus de l'extension 23a dudit insert métallique, et donc de la pièce sacrificielle 25a et est interrompu sensiblement à l'autre extrémité de l'insert métallique 23, donc au-dessus de l'autre extension 23b dudit insert métallique, et de la pièce sacrificielle 25b.

Lorsque l'assemblage de pièces est dégagé de l'outillage après la réalisation de la soudure, les pièces sacrificielles 25a, 25b, qui n'ont pas adhéré à la seconde pièce en raison de la présence du film anti-adhérence, sont éliminées 273 et l'excédent d'insert métallique formé par les extensions 23a, 23b, qui n'est pas emprisonné dans la soudure, peut être éliminé 274.

Ce perfectionnement du procédé permet de décaler en dehors de la soudure des pièces les hétérogénéités liées aux perturbations du champ magnétique et aux conditions aux limites qui caractérisent les début et fin de soudure, sensible aux éléments magnétiques, et qui ne permettent pas de garantir une répartition uniforme de l'énergie aux extrémités de la trajectoire de la tête magnétique d'induction 30.

Il en résulte que la partie utile de la soudure est formée dans des conditions homogènes sur toute sa longueur.

Les longueurs d'extensions dLa et dLb sont par exemple de l'ordre de cent millimètres, leurs longueurs n'étant cependant pas critique. Pouvant dépendre de conditions particulières liées aux pièces, à l'outillage et à la tête magnétique d'induction, avantageusement la longueur sera définie ou au moins confirmées expérimentalement dans chaque cas d'espèce.

Dans l'exemple illustré, la seconde pièce 22 est représentée plane mais le procédé est applicable à toutes les formes de pièces courbes ou gauches qui peuvent être mises en référence sur une matrice, dont la forme est dans ce cas adaptée.

Le dispositif de l'invention et procédé permettent ainsi de réaliser des assemblages résistants de pièces en matériau composite thermoplastique en évitant de recourir à des fixations rapportées.

## Revendications

1. Dispositif (100) de soudage thermoplastique, pour l'assemblage d'au moins une première pièce (21) en matériau composite thermoplastique dont une matrice est essentiellement formée par une résine thermoplastique et d'au moins une seconde pièce (22) en matériau composite thermoplastique d'un type similaire au matériau composite de la première pièce, comportant :
- une tête magnétique d'induction (30) ;
- une matrice (10) de mise en référence des pièces devant être assemblées dont un insert isolant (12) amagnétique détermine des zones de liaison (25) dans lesquelles des soudures thermoplastiques doivent être réalisées ;
- une vessie (11) déterminant entre ladite vessie et la matrice (10) un volume étanche et des moyens de réalisation d'un vide partiel dans ledit volume étanche ;
- des moyens de déplacement de la tête magnétique d'induction (30) à proximité des zones de liaison (25) et sans contact avec la vessie (11).

2. Dispositif suivant la revendication 1 dans lequel l'insert isolant (12) comporte au moins une empreinte dont une forme est adapté au maintien en référence d'au moins une première pièce (21).

3. Dispositif suivant la revendication 2 dans lequel l'insert isolant (12) est réalisé dans un matériau polymère amagnétique usinable.

4. Dispositif suivant l'une des revendications précédentes dans lequel l'insert isolant (12) est maintenu immobile dans un support (13) réalisé dans un matériau métallique amagnétique.

5. Dispositif suivant l'une des revendications précédentes dans lequel des cales (24) sont agencées sur l'insert isolant (12) dans les zones de liaison (25) pour servir de support à des zones des premières pièces (21) devant être portées à une température de fusion de la résine de la matrice du matériau composite de ladite première pièce.

6. Procédé (200) de soudage thermoplastique d'au moins une première pièce (21) en matériau composite thermoplastique avec au moins une seconde pièce (22) en matériau composite thermoplastique par mise en fusion de la résine des matrices des dites au moins une première pièce et au moins une seconde pièce au moyen d'une tête magnétique d'induction (30), comportant les étapes successives de :
- mise en référence (210) d'au moins une première pièce (21) dans une empreinte (17), de forme adaptée au maintien de ladite au moins une première pièce, d'un insert isolant (12) amagnétique d'une matrice (10) d'un outillage (100) de soudage thermoplastique ;
- placement (220) d'inserts métalliques (23) sur les surfaces de l'au moins une première pièce (21) correspondant à des zones de liaison (25) devant être soudées ;
- mise en référence (230) d'au moins une seconde pièce (22) sur la matrice (10) dans la position relative que la dite au moins une seconde pièce doit avoir avec l'au moins une première pièce dans l'assemblage à réaliser ;
- mise en place (240) d'une vessie (11) de sorte que ladite vessie et la matrice (10) détermine un volume étanche dans lequel se trouvent enfermées l'au moins une première pièce et l'au moins une seconde pièce ;
- création d'un vide partiel (250) dans le volume étanche pour créer, sous l'effet de la pression de l'air extérieur au volume étanche, une force d'appui de l'au moins une seconde pièce (22) sur l'au moins une première pièce (21), au moins dans les zones de liaison (25) ;
- déplacement sans contact (260) de la tête magnétique d'induction (30) à proximité de toutes les zones de liaison (25) de sorte à créer dans les inserts métalliques (23) des courants induits et une production de chaleur par effet Joule de sorte à produire la fusion locale de la résine des matrices du matériau composite des premières et secondes pièces, tout en maintenant le vide partiel dans le volume étanche ;
- après refroidissement des pièces soudées à une température ambiante, ou au moins à une température sensiblement inférieure à une température de ramollissement de la résine du matériau des dites pièces, rupture du vide partiel (271), démontage (272) de la vessie (11) et démoulage (270) de l'assemblage de pièces soudées entre elles de l'outillage (100).

7. Procédé suivant la revendication 6 comportant une étape de pose (211) de cales entre l'insert isolant (12) et les premières pièces (21) dans les zones de liaisons (25).

8. Procédé suivant la revendication 6 ou la revendication 7 comportant une étape de placement (241) d'un tissus de drainage (16) interposé entre les pièces en référence sur la matrice (10) et la vessie (11), pour assurer une aspiration de l'air dans tout le volume étanche entre ladite matrice et ladite vessie.

9. Procédé suivant l'une des revendications 6 à 8 dans lequel les inserts métalliques (23) sont imprégnés (221), avant d'être placés, d'une résine thermoplastique compatible avec la résine thermoplastique de la matrice du matériau composite des pièces de l'assemblage à réaliser.

10. Procédé suivant l'une des revendications 6 à 9 dans lequel :
- des pièces sacrificielles (25a, 25b) sont mises en référence (212) à des extrémités, suivant un sens de réalisation d'un cordon de soudure, de l'au moins une première pièce (21) dans l'empreinte (17), formée à cet effet, réalisée dans l'insert isolant (12) ;
- le placement (220) d'inserts métalliques (23) sur les surfaces de l'au moins une première pièce (21) est étendu par des extensions (23a, 23b) à des extrémités dudit insert métallique sur des surface des dites pièces sacrificielles ;
- un film anti-adhérence est déposé (222) entre les extensions (23a, 23b) et chacune des premières pièces et secondes pièces avec lesquelles lesdites extensions sont en contact en position dans l'outillage ;
- le déplacement (260) de la tête magnétique d'induction (30) pour réaliser le cordon de soudure est étendu à chacune des extrémités du cordon de soudure en deçà et au-delà d'une longueur utile dudit cordon de soudure de sorte à débuter et à terminer le chauffage des pièces à souder au niveau des pièces sacrificielles (25a, 25b).

## Patentansprüche

1. Vorrichtung (100) zum thermoplastischen Schweißen, zum Zusammenfügen wenigstens eines ersten Teils (21) aus thermoplastischem Verbundstoffmaterial, wobei eine Matrix desselben im Wesentlichen von einem thermoplastischen Harz gebildet wird, und wenigstens eines zweiten Teils (22) aus thermoplastischem Verbundstoffmaterial eines Typs, der dem Verbundstoffmaterial des ersten Teils ähnlich ist, umfassend:
- einen Induktions-Magnetkopf (30);
- eine Matrize (10) zur Positionierung der Teile, die zusammengefügt werden sollen, relativ zueinander, wobei ein amagnetischer Isoliereinsatz (12) derselben Verbindungsbereiche (25) bestimmt, in welchen thermoplastische Schweißungen durchgeführt werden sollen;
- einen Balg (11), der zwischen dem Balg und der Matrize (10) ein dichtes Volumen bestimmt, und Mittel zur Herstellung eines Teilvakuums in dem dichten Volumen;
- Mittel zur Verlagerung des Induktions-Magnetkopfes (30) in der Nähe der Verbindungsbereiche (25) und ohne Kontakt mit dem Balg (11).

2. Vorrichtung nach Anspruch 1, wobei der Isoliereinsatz (12) wenigstens einen Formhohlraum aufweist, dessen Form für das Halten wenigstens eines ersten Teils (21) in einer bestimmten Position ausgelegt ist.

3. Vorrichtung nach Anspruch 2, wobei der Isoliereinsatz (12) aus einem maschinell bearbeitbaren amagnetischen Polymermaterial hergestellt ist.

4. Vorrichtung nach einem der vorhergehenden Ansprüche, wobei der Isoliereinsatz (12) in einem Träger (13), der aus einem amagnetischen metallischen Material hergestellt ist, unbeweglich gehalten wird.

5. Vorrichtung nach einem der vorhergehenden Ansprüche, wobei auf dem Isoliereinsatz (12) in den Verbindungsbereichen (25) Unterlagen (24) angeordnet sind, um als Abstützung für Bereiche der ersten Teile (21) zu dienen, die auf eine Schmelztemperatur des Harzes der Matrix des Verbundstoffmaterials des ersten Teils gebracht werden müssen.

6. Verfahren (200) zum thermoplastischen Verschweißen wenigstens eines ersten Teils (21) aus thermoplastischem Verbundstoffmaterial mit wenigstens einem zweiten Teil (22) aus thermoplastischem Verbundstoffmaterial durch Aufschmelzen des Harzes der Matrizen des wenigstens einen ersten Teils und des wenigstens einen zweiten Teils mittels eines Induktions-Magnetkopfes (30), die aufeinander folgenden Schritte umfassend:
- Positionierung (210) wenigstens eines ersten Teils (21) in einem eine für das Halten des wenigstens eines ersten Teils ausgelegte Form aufweisenden Formhohlraum (17) eines amagnetischen Isoliereinsatzes (12) einer Matrize (10) eines Werkzeugs (100) zum thermoplastischen Schweißen;
- Anbringung (220) metallischer Einsätze (23) auf den Flächen des wenigstens einen ersten Teils (21), die Verbindungsbereichen (25) entsprechen, die geschweißt werden sollen;
- Positionierung (230) wenigstens eines zweiten Teils (22) auf der Matrize (10) in der relativen Position, welche das wenigstens eine zweite Teil in Bezug auf des wenigstens eine erste Teil in dem herzustellenden Verbund aufweisen muss;
- Anordnung (240) eines Balges (11), derart, dass der Balg und die Matrize (10) ein dichtes Volumen bestimmen, in welchem das wenigstens eine erste Teil und das wenigstens eine zweite Teil dann eingeschlossen sind;
- Erzeugung eines Teilvakuums (250) in dem dichten Volumen, um unter der Wirkung des Druckes der Außenluft auf das dichte Volumen eine Anpresskraft des wenigstens einen zweiten Teils (22) an das wenigstens eine erste Teil (21) wenigstens in den Verbindungsbereichen (25) zu erzeugen;
- kontaktlose Verlagerung (260) des Induktions-Magnetkopfes (30) in der Nähe aller Verbindungsbereiche (25), um in den metallischen Einsätzen (23) induzierte Ströme zu erzeugen und eine Erzeugung von Wärme durch den Joule-Effekt zu bewirken, um so das lokale Aufschmelzen des Harzes der Matrizen des Verbundstoffmaterials des ersten und des zweiten Teils hervorzurufen, bei gleichzeitiger Aufrechterhaltung des Teilvakuums in dem dichten Volumen;
- nach Abkühlung der geschweißten Teile auf eine Umgebungstemperatur oder wenigstens auf eine Temperatur, die wesentlich niedriger als eine Erweichungstemperatur des Harzes des Materials der Teile ist, Unterbrechung des Teilvakuums (271), Abbau (272) des Balges (11) und Entformung (270) des Verbundes von miteinander verschweißten Teilen aus dem Werkzeug (100).

7. Verfahren nach Anspruch 6, welches einen Schritt des Einlegens (211) von Unterlagen zwischen den Isoliereinsatz (12) und die ersten Teile (21) in den Verbindungsbereichen (25) umfasst.

8. Verfahren nach Anspruch 6 oder Anspruch 7, welches einen Schritt der Anbringung (241) eines Drainagegewebes (16) umfasst, das zwischen den zueinander positionierten Teilen auf der Matrize (10) und dem Balg (11) angeordnet wird, um eine Absaugung der Luft in dem gesamten dichten Volumen zwischen der Matrize und dem Balg sicherzustellen.

9. Verfahren nach einem der Ansprüche 6 bis 8, wobei die metallischen Einsätze (23), bevor sie angebracht werden, mit einem thermoplastischen Harz imprägniert werden (221), das mit dem thermoplastischen Harz der Matrix des Verbundstoffmaterials der Teile des herzustellenden Verbundes kompatibel ist.

10. Verfahren nach einem der Ansprüche 6 bis 9, wobei:
- Opfer-Teile (25a, 25b) an Enden, auf eine Ausführungsrichtung einer Schweißnaht bezogen, des wenigstens einen ersten Teils (21) in dem zu diesem Zweck gebildeten Formhohlraum (17), der im Isoliereinsatz (12) hergestellt ist, positioniert werden (212);
- die Anbringung (220) metallischer Einsätze (23) auf den Flächen des wenigstens einen ersten Teils (21) durch Verlängerungen (23a, 23b) an Enden des metallischen Einsatzes auf Flächen der Opfer-Teile erweitert wird;
- ein Antihaftfilm zwischen den Verlängerungen (23a, 23b) und jedem der ersten und zweiten Teile, mit denen sich diese Verlängerungen in der Position im Werkzeug in Kontakt befinden, aufgebracht wird (222) ;
- die Verlagerung (260) des Induktions-Magnetkopfes (30), um die Schweißnaht auszuführen, an jedem der Enden der Schweißnaht in beiden Richtungen über eine nützliche Länge der Schweißnaht hinaus erweitert wird, um die Erwärmung der zu verschweißenden Teile im Bereich der Opfer-Teile (25a, 25b) zu beginnen und zu beenden.

## Claims

1. Thermoplastic welding device (100) for assembling at least one first part (21) made of thermoplastic composite material, a matrix of which is essentially formed by a thermoplastic resin, and at least one second part (22) made of thermoplastic composite material of a type similar to the composite material of the first part, comprising:
- a magnetic induction head (30);
- a die (10) for positioning the parts that have to be assembled, a nonmagnetic insulating insert (12) of which defines bonding zones (25) in which thermoplastic welds should be made;
- a bladder (11) defining, between said bladder and the die (10), an airtight volume and means for producing a partial vacuum in said airtight volume;
- means for displacement of the magnetic induction head (30) close to the bonding zones (25) and without contact with the bladder (11).

2. Device according to Claim 1, wherein the insulating insert (12) comprises at least one cavity, a shape of which is suitable for holding at least one first part (21) in position.

3. Device according to Claim 2, wherein the insulating insert (12) is made from a machinable nonmagnetic polymer material.

4. Device according to one of the preceding claims, wherein the insulating insert (12) is immobilized in a support (13) made from a nonmagnetic metallic material.

5. Device according to one of the preceding claims, wherein shims (24) are arranged on the insulating insert (12) in the bonding zones (25) in order to act as support for zones of the first parts (21) that have to be bought to a melting point of the resin of the matrix of the composite material of said first part.

6. Process (200) for the thermoplastic welding of at least one first part (21) made of thermoplastic composite material with at least one second part (22) made of thermoplastic composite material by melting the resin of the matrices of said at least one first part and at least one second part by means of a magnetic induction head (30), comprising the successive steps of:
- positioning (210) at least one first part (21) in a cavity (17), having a shape suitable for holding said at least one first part, of a nonmagnetic insulating insert (12) of a die (10) of a thermoplastic welding tool (100);
- placing (220) metal inserts (23) on the surfaces of the at least one first part (21) corresponding to bonding zones (25) that have to be welded;
- positioning (230) at least one second part (22) on the die (10) in the relative position that said at least one second part should have with the at least one first part in the assembly to be produced;
- arranging (240) a bladder (11) so that said bladder and the die (10) define an airtight volume wherein the at least one first part and the at least one second part are enclosed;
- creating a partial vacuum (250) in the airtight volume in order to create, under the effect of the pressure of the air outside the airtight volume, a bearing force of the at least one second part (22) on the at least one first part (21), at least in the bonding zones (25);
- contactless displacement (260) of the magnetic induction head (30) close to all the bonding zones (25) so as to create in the metal inserts (23) induced currents and a production of heat via the Joule effect so as to give rise to the local melting of the resin of the matrices of the composite material of the first and second parts, while maintaining the partial vacuum in the airtight volume;
- after cooling the welded parts to an ambient temperature, or at least to a temperature substantially below a softening point of the resin of the material of said parts, breaking (271) the partial vacuum, disassembling (272) the bladder (11) and removing (270) the assembly of parts welded together from the tool (100) .

7. Process according to Claim 6, comprising a step of placing (211) shims between the insulating insert (12) and the first parts (21) in the bonding zones (25).

8. Process according to Claim 6 or Claim 7, comprising a step of placing (241) a drainage fabric (16) inserted between the parts positioned on the die (10) and the bladder (11), to ensure a suction of air throughout the airtight volume between said die and said bladder.

9. Process according to one of Claims 6 to 8, wherein the metal inserts (23) are impregnated (221), before being positioned, with a thermoplastic resin that is compatible with the thermoplastic resin of the matrix of the composite material of the parts of the assembly to be produced.

10. Process according to one of Claims 6 to 9, wherein:
- sacrificial parts (25a, 25b) are positioned (212) at ends, following a direction for producing a weld seam, of the at least one first part (21) in the cavity (17), formed for this purpose, made in the insulating insert (12) ;
- the placing (220) of metal inserts (23) on the surfaces of the at least one first part (21) is extended by extensions (23a, 23b) at ends of said metal insert on surfaces of said sacrificial parts;
- a nonstick film is deposited (222) between the extensions (23a, 23b) and each of the first parts and second parts with which said extensions are in contact in position in the tool;
- the displacement (260) of the magnetic induction head (30) in order to produce the weld seam is extended at each of the ends of the weld seam on either side of a working length of said weld seam so as to begin and end the heating of the parts to be welded level with the sacrificial parts (25a, 25b).
